# Europäisches Patentamt

(19) **European Patent Office**

**Office européen des brevets**

(11) Numéro de publication: **0 102 860**
**B1**

(12) **FASCICULE DE BREVET EUROPEEN**

(45) Date de publication du fascicule du brevet:
**28.12.88**

(51) Int. Cl.⁴: **C 08 F 10/02,** C 08 F 4/38,
C 08 F 4/62

(21) Numéro de dépôt: **83401418.5**

(22) Date de dépôt: **08.07.83**

(54) Procédé de fabrication d'homopolymères et de copolymères de l'éthylène.

(30) Priorité: **29.07.82 JP 133139/82**

(43) Date de publication de la demande:
**14.03.84 Bulletin 84/11**

(45) Mention de la délivrance du brevet:
**28.12.88 Bulletin 88/52**

(84) Etats contractants désignés:
**AT BE CH DE FR GB IT LI LU NL SE**

(56) Documents cités:
**FR-A- 1 168 261**
**FR-A- 2 302 305**

(73) Titulaire: **NORSOLOR S.A., Tour Aurore Place des Reflets, F-92080 Paris la Defense Cédex 5 (FR)**

(72) Inventeur: **Takayuki, Okada, 13-58, 1-chome, Aobadai, Ichihara-shi (JP)**
Inventeur: **Hisao, Tanaka, 9, 1-chome, Yushudai-nishi, Ichihara-shi (JP)**
Inventeur: **Ken-Ichi, Sawara, 1, 2-chome, Kuwata-cho, Irabagi-shi (JP)**
Inventeur: **Tsutomu, Konaka, 9, 1-chome, Yushudai-nishi, Ichihara-shi (JP)**

(74) Mandataire: **Dubost, Thierry et al, c/o NORSOLOR Service Propriété Industrielle B.P. 57, F-62670 Mazingarbe (FR)**

## Description

La présente invention concerne un procédé de fabrication d'homopolymères et de copolyméres de l'éthylène, sous une pression d'au moins 300 bars et à une température d'au moins 130 °C. Plus particulièrement, l'invention concerne un procédé continu de polymérisation ou de copolymérisation de l'éthylène dans les conditions de pression et de température sus-dites, mettant en œuvre un catalyseur de polymérisation ionique tel qu'un catalyseur Ziegler et selon lequel un désactivateur du catalyseur est ajouté au mélange réactionnel à la fin de la réaction.

Il est connu de (co)polymériser l'éthylène sous une pression de 300 à 3000 bars et à une température de 140 à 320 °C en utilisant un catalyseur de polymérisation ionique tel qu'un catalyseur ionique. Selon ce procédé, le mélange réactionnel formé dans le réacteur est successivement introduit dans 2 séparateurs fonctionnant, respectivement, sous haute et basse pression. Ces séparateurs ont pour fonction de séparer les polymères formés des gaz n'ayant pas réagi, et ils opèrent généralement sous une pression, respectivement, de 100 à 500 bars et de 1 à 50 bars. Ce procédé, cependant, présente les inconvénients suivants: dans les conditions auxquelles est soumis le séparateur haute pression, la polymérisation de l'éthylène (ou sa copolymérisation avec une α-oléfine) se poursuit dans ledit séparateur; elle est due à une petite quantité de catalyseur de polymérisation ionique résiduel provenant du réacteur; des produits non désirés sont formés, comme des polymères de basse masse moléculaire ou des cires. Ces produits affectent de façon néfaste la qualité du polymère formé et peuvent conduire au bouchage des tuyauteries. Egalement, des points chauds peuvent se former localement quand la polymérisation se poursuit dans le séparateur en présence du catalyseur de polymérisation ionique résiduel, pouvant provoquer la décomposition thermique de l'éthylène.

De façon à limiter ces inconvénients, on a proposé par exemple le procédé continu de fabrication de polyéthylènes utilisant un catalyseur de polymérisation ionique et basé sur le procédé haute pression, décrit dans le brevet français n° 2 302 305. Le procédé décrit dans ce brevet consiste à ajouter au milieu réactionnel, à proximité de la vanne de sortie du réacteur, un composé d'un métal alcalin ou un sel d'un métal alcalino-terreux et d'un acide carboxylique aliphatique saturé ou aromatique, de façon à désactiver le catalyseur actif de polymérisation ionique provenant du réacteur. Le produit de réaction entre le désactivateur et le catalyseur reste, selon ce procédé, dans le polymère et l'addition du composé ci-dessus est insuffisante pour empêcher les réactions secondaires de se produire dans les gaz de recyclage n'ayant pas réagi, et provenant particulièrement du séparateur haute pression.

Des études ont été poursuivies de façon à éviter les défauts décrits ci-dessus. L'invention propose un procédé de fabrication d'homopolymères ou de copolymères de l'éthylène qui comprend la polymérisation en continu de l'éthylène, ou la copolymérisation en continu de l'éthylène et d'une α-oléfine, sous une pression d'au moins 300 bars et à une température d'au moins 130 °C en présence d'un système catalytique comprenant un composé d'au moins un métal de transition des groupes IVa à VIa de la Classification Périodique et un composé organométallique d'un métal des groupes I à III de la Classification Périodique, caractérisé en ce que on ajoute, à la fin de la réaction, au milieu réactionnel, un polyalkylèneglycol ayant une masse moléculaire comprise entre 300 et 5000, en une quantité molaire comprise entre 0,4 et 15 fois le nombre total d'atomes-grammes du métal de transition des groupes IVa à VIa et du métal des groupes I à III.

Le procédé selon la présente invention a rendu possible d'empêcher, à la fois, les réactions secondaires qui se produisent dans le séparateur haute pression et dans les gaz recyclés n'ayant pas réagi, c'est-à-dire les réactions secondaires ayant lieu dans le séparateur haute pression dues essentiellement à l'ensemble des composants du système catalytique de polymérisation ionique suivant, et les réactions secondaires ayant lieu dans les gaz recyclés n'ayant pas réagi et dues principalement aux derniers des composants suivants du système catalytique.

Le système catalytique de polymérisation ionique utilisé dans la présente invention, comprend au moins un composé d'un métal de transition des groupes IVa à VIa de la Classification Périodique et au moins un composé organométallique d'un métal des groupes I à III de la Classification Périodique.

En tant que composé d'un métal de transition des groupes IVa à VIa, on peut mentionner par exemples les complexes π-allyliques ou π-benzyliques du chrome, du zirconium et du titane, les composés de titane di-, tri- ou tétravalents, les composés de vanadium tri-, tétra ou pentavalents. Ces composés de métal de transition peuvent aussi être utilisés comme catalyseurs à l'état supporté sur des supports contenant des halogénures ou hydroxyhalogénures de magnésium, de l'alumine, des composés du silicium. Egalement, ces composés de métal de transition peuvent même être utilisés en présence d'un agent complexant tels un éther, une amine ou un acide carboxylique. De plus on peut utiliser un composé de métal de transition ou bien un mélange de 2 ou plusieurs de ces composés.

Parmi les composés organométalliques des métaux des groupes I à III de la Classification Périodique, les composés organoaluminiques sont particulièrement préférés. On a mentionné, par exemple, les trialkylaluminiums comme le triéthylaluminium, le tri-n-propylaluminium, le tri-n-butylaluminium, le tri-n-hexylaluminium; des monohalogénures de dialkylaluminium comme le chlorodiéthylaluminium, le chloro di-n-propylaluminium, le chloro-di-n-butylaluminium, le chloro di-n-hexylaluminium; des dihalogénoalkylaluminium comme le dichloroéthylaluminium, le dichloro-n-propylaluminium, le dichloro-n-butylaluminium, le dichloro-n-hexylaluminium; des sesquichlorures d'alkylaluminium comme le sesquichlorure d'éthylaluminium, le sesquichlorure de n-propylaluminium, le sesquichlorure de n-butylaluminium, le sesquichlorure de n-hexylaluminium; et les dérivés d'alkylsiloxyalanes. On peut utiliser ces composés seuls ou en mélanges de 2 ou plusieurs d'entre eux.

Le système catalytique est utilisé à l'état de solution dans un solvant inerte approprié comme l'hexane, l'heptane, le toluène, des huiles hydrocarbonées, ou à l'état de dispersion. Les composés de métal de transition des groupes IVa à VIa et les composés organométalliques des métaux des groupes I à III peuvent être mélangés à l'avance puis injectés dans le réacteur à l'état de mélange; ils peuvent aussi être injectés séparément dans le réacteur au moyen de tuyauteries séparées et mélangés dans le réacteur.

Le réacteur utilisé pour (co)polymériser l'éthylène est du type autoclave à agitation interne ou bien du type tubulaire. La polymérisation est conduite dans une zone réactionnelle unique mais peut aussi avoir lieu dans une pluralité de zones réactionnelles séparées dans un réacteur ou une pluralité de réacteurs connectés en série ou en parallèle. Quand une pluralité de réacteurs est utilisée, il peut s'agir d'une combinaison autoclave-autoclave ou autoclave-tubulaire. Quand la polymérisation est réalisée dans une pluralité de zones réactionnelles ou de réacteurs, il est possible d'utiliser des températures différentes, des pressions différentes, et des compositions gazeuses différentes dans chaque zone réactionnelle ou dans chaque réacteur, de façon à obtenir des polymères de différentes caractéristiques. On peut mentionner, parmi les α-oléfines susceptibles d'être copolymérisées avec l'éthylène, par exemple le propène, le butène-1, l'hexène-1, l'octène-1, le méthyl-4-pentène-1.

Le polyalkylèneglycol utilisé selon la présente invention comme désactivateur du système catalytique est un polyéthylèneglycol, un polypropylèneglycol, un polybutylèneglycol. On préfère particulièrement un polyéthylèneglycol et un polypropylèneglycol. Ce désactivateur est ajouté au milieu réactionnel à un certain endroit de l'installation de polymérisation où l'on pense que la polymérisation ou la copolymérisation de l'éthylène est substantiellement complète. Généralement on préfère ajouter le désactivateur à un endroit aussi proche que possible de la vanne de sortie du réacteur. Le désactivateur peut être ajouté à l'état pur ou bien dilué à l'aide d'un solvant inerte tel qu'un hydrocarbure aliphatique, aromatique, alicyclique. Si nécessaire, le désactivateur peut, de plus, être ajouté aux gaz recyclés. Dans ce cas il est préférable d'utiliser un désactivateur ayant une masse moléculaire relativement élevée, dans la gamme de masses moléculaires des désactivateurs selon l'invention, parce qu'un tel désactivateur est difficilement recyclé dans le réacteur.

Selon la présente invention, le catalyseur actif de polymérisation ionique évacué du réacteur peut être désactivé de façon sûre par addition d'une quantité molaire de désactivateur comprise entre 0,4 et 15 fois, de préférence entre 0,8 et 10 fois, la quantité totale d'atomes-grammes de métal des groupes IVa à VIa et de métal des groupes I à III de la Classification Périodique. La gamme ci-dessus de quantité de désactivateur est choisie pour les raisons suivantes. Une quantité de désactivateur inférieure à 0,4 mole par atome-gramme de métal est insuffisante pour empêcher, à la fois, les réactions secondaires dans le séparateur haute pression et dans les gaz recyclés n'ayant pas réagi. Si le désactivateur est utilisé à raison de plus de 15 fois, la quantité de désactivateur mélangé avec le polymère formé, dans le séparateur haute pression, devient élevée et conduit à un accroissement des composés de basse masse moléculaire dans le polymère, qui n'est pas souhaitable du point de vue de la qualité du polymère; de plus la concentration de désactivateur dans les gaz recyclés devient élevée et le piégeage du désactivateur dans le collecteur devient difficile et il en résulte que le désactivateur est susceptible d'être recyclé dans le réacteur avec les gaz, et de réduire l'activité du catalyseur de polymérisation ionique dans le réacteur.

De même que la quantité de polyalkylèneglycol, sa masse moléculaire est un facteur important dans l'obtention des résultats de la présente invention. Le polyalkylèneglycol ajouté à la sortie du réacteur est introduit dans le séparateur haute pression en même temps que le mélange réactionnel et se répartit entre, d'une part, le polymère obtenu et, d'autre part, le gaz n'ayant pas réagi. Le polyalkylèneglycol se trouvant dans les gaz empêche les réactions secondaires de se produire dans les conduites de recyclage et est piégé par le collecteur comprenant un cyclone et un filtre, avant ou après que les gaz de recyclage aient été mélangés avec du gaz frais. Dans ce cas, si la masse moléculaire du polyalkylèneglycol est basse, comme sa quantité croît, les dimensions des particules dans le brouillard de polyalkylèneglycol et de gaz recyclé deviennent plus petites, et ainsi ce brouillard ne peut pas être piégé complètement, et une partie de ce brouillard est réintroduit dans le réacteur en même temps que les gaz provenant du compresseur, et réduit l'activité du système catalytique. D'un autre côté, le polyalkylèneglycol se retrouvant dans le polymère formé conduit à une augmentation des composés de basse masse moléculaire dans le polymère dont la qualité est détériorée. Dans ce cas la masse moléculaire du polyalkylèneglycol joue un rôle important. Si elle est élevée, la quantité de polyalkylèneglycol se retrouvant dans le polymère dans le séparateur haute pression augmente, entraînant une diminution de la qualité du polymère produit et, en même temps, l'inhibition des réactions secondaires dans le gaz recyclé est diminuée provoquant le bouchage des conduites de recyclage, l'augmentation de la quantité de produits de basse masse moléculaire à évacuer, une détérioration de la conduction thermique.

Pour les raisons mentionnées ci-dessus, la masse moléculaire du polyalkylèneglycol à utiliser est comprise entre 300 et 5000, et de préférence entre 400 et 3000.

Les exemples non limitatifs suivants ont pour but d'illustrer l'invention.

EXEMPLE 1

Dans un réacteur autoclave muni d'un agitateur tournant à 1500 tours/min, on introduit en continu de l'éthylène comprimé à 1500 bars au moyen d'un hypercompresseur, de façon telle que son temps de séjour moyen soit de 60 s. On introduit également une fine dispersion de catalyseur dans un liquide, obtenue en ajoutant à une dispersion de TiCl$_3$, 1/3 AlCl$_3$ et de triéthylaluminium dans l'heptane dans laquelle le rapport atomique Al/Ti = 5, de l'hexène-1 en une quantité égale à 20 moles par atome-gramme d'Al, et en soumettant le mélange à une prépolymérisation à 20 °C. On a ainsi réalisé la polymérisation en continu de l'éthylène. L'alimentation en catalyseur correspond à 17 ppm de catalyseur solide en poids par rapport à l'éthylène. Environ 15% de l'éthylène sont convertis en polyéthylène.

Le mélange réactionnel provenant du réacteur est introduit dans le séparateur haute pression où, après diminution de la pression, le polymère et les gaz non réagis sont séparés et les gaz non réagis sont recyclés pour être réutilisés après refroidissement.

Après un certain temps de polymérisation, un polypropylène glycol de masse moléculaire 1000 est introduit dans le réacteur au moyen d'une pompe, en une quantité molaire égale à 5 fois le nombre total d'atomes-grammes d'Al et Ti dans le système catalytique, par un autre conduit faisant face à la conduite d'introduction du système catalytique (aboutissant au réacteur) à la même hauteur et sous un angle de 180°. La température à l'intérieur du réacteur a chuté, la poursuite de la polymérisation est devenue impossible provoquant ce qui est appelé la perte de réaction, et finalement la formation de polymère est devenue non détectable. Cela signifie que la fin de la réaction de polymérisation et la désactivation du système catalytique étaient confirmées.

EXEMPLE 2

On utilise la même installation et le même système catalytique qu'à l'exemple 1. De l'éthylène contenant 0,5% en volume d'hydrogène est polymérisé en continu sous une pression de 1500 bars, à une température de 250 °C, et pendant un temps de séjour de 60 s. A un endroit situé immédiatement après la vanne de sortie du réacteur on a ajouté au milieu réactionnel un polypropylèneglycol de masse moléculaire 500 en une quantité molaire égale à 3 fois le nombre total d'atomes-grammes d'Al et Ti dans le système catalytique. A titre comparatif on a réalisé un essai dans lequel on n'a pas ajouté de polypropylèneglycol. La conversion de l'éthylène en polyéthylène est d'environ 19 à 20% dans les 2 cas. Le système catalytique a été utilisé à raison de 20 ppm de produit solide, en poids, par rapport à l'éthylène.

Le tableau I montre que des différences ont été constatées entre l'exemple 2 selon l'invention et l'exemple comparatif dans la température à l'entrée du séparateur haute pression, la température dans le séparateur haute pression, le coefficient de conductibilité thermique dans le réfrigérant des gaz recyclés, la quantité évacuée et le degré de coloration des granulés de polymère produit, due aux produits de la décomposition douce de l'éthylène, et les quantités respectives de substances à basse et haute masse moléculaire dans le polymère produit. Dans l'exemple comparatif, par rapport à l'exemple 2 selon l'invention, apparemment la réaction de polymérisation se pousuit même après le réacteur, conduisant ainsi à des résultats non souhaitables.

EXEMPLE 3

De l'éthylène contenant 0,4% d'hydrogène en volume est polymérisé dans un autoclave sous une pression de 1500 bars, à une température de 240 °C et pendant un temps de séjour de 60 s tandis que l'on introduit dans l'autoclave une dispersion liquide de système catalytique préparée en diluant dans de l'heptane (A) un catalyseur solide (contenant 3% en poids de titane) obtenu en faisant réagir (a) un produit solide obtenu par réaction de n-BuMgCl avec SiCl$_4$ dans l'éther di-n-butylique et (b) un composé liquide de titane obtenu par réaction de TiCl$_4$ avec (C$_2$H$_5$)$_2$NH dans le monochlorobenzène, et (B) Al(C$_2$H$_5$)$_3$ en une quantité molaire égale à 5 fois le nombre d'atomes-grammes de Ti. A un endroit situé à l'entrée du séparateur haute pression, on ajoute au milieu réactionnel un polyéthylèneglycol fondu ayant une masse moléculaire de 4000 en une quantité molaire égale à 3 fois le nombre total d'atomes-grammes d'Al et Ti dans le système catalytique.

A titre d'exemples comparatifs, on a aussi réalisé un essai dans lequel on a utilisé un polyéthylèneglycol de masse moléculaire 7000 et un essai sans polyéthylèneglycol.

Le taux de conversion de l'éthylène en polyéthylène est d'environ 18 à 19% pour tous ces exemples.

Le système catalytique était introduit à raison de 12 ppm de produit solide, en poids, par rapport à l'éthylène. Les résultats obtenus figurent dans le tableau II.

Selon l'invention (exemple 3), par rapport à l'exemple comparatif n° 2, la polymérisation dans le séparateur haute pression a été empêchée, les réactions secondaires dans la conduite de recyclage de l'éthylène ont lieu très difficilement et le degré de coloration du polymère produit et la formation de substances de plus basse masse moléculaire sont faibles. De plus, comme le montre la comparaison entre l'exemple 3 selon l'invention et l'exemple comparatif n° 1, si on utilise un polyéthylèneglycol de masse moléculaire plus élevée, les réactions secondaires dans la conduite d'éthylène recyclé et la quantité de produits de basse masse moléculaire dans le polymère formé, augmentent.

EXEMPLE 4

On a copolymérisé de l'éthylène contenant 30% en poids de butène-1 et 0,6% en volume d'hydrogène, en utilisant le système catalytique de l'exemple 3, sous une pression de 1000 bars, à une température de 230°C, pendant un temps de séjour de 70 s. A un endroit situé juste après la vanne de sortie du réacteur, on a ajouté au milieu réactionnel un polypropylèneglycol de masse moléculaire 700 en une quantité molaire égale à 2 fois le nombre d'atomes-grammes de Al et Ti dans le système catalytique.

A titre d'exemples comparatifs on a réalisé un essai avec un polypropylèneglycol de masse moléculaire 300 et un essai sans polypropylèneglycol.

Le taux de conversion des monomères en copolymère est d'environ 16 à 17% dans les 3 cas. Le système catalytique a été introduit à raison de 10 ppm de produit solide, en poids, par rapport à l'éthylène. Les résultats obtenus sont rassemblés dans le tableau III.

L'exemple 4 selon l'invention, par rapport à l'exemple comparatif 2, montre l'effet obtenu, de la même manière qu'aux exemples 2 et 3. Dans l'exemple comparatif 1, les réactions secondaires dans la conduite de monomère recyclé n'ayant pas réagi ont été empêchées mais les réactions secondaires dans la couche de polymère contenue dans le séparateur haute pression n'ont pas été en fait empêchées et ainsi la quantité de substances de basse masse moléculaire dans le polymère produit a augmenté. Selon l'exemple 4, toutes les réactions secondaires ont été empêchées effectivement et l'effet obtenu au moyen de l'invention est apparent.

TABLEAU I

| | Exemple Comparatif | Exemple 2 |
|---|---|---|
| Polypropylèneglycol séparateur haute pression | Non | Oui |
| Température du mélange réactionnel à l'entrée, °C | 265 | 250 |
| Température de la couche de polymère, °C | 260 | 240 |
| Conduite d'éthylène non réagi recyclé | | |
| Coefficient global de conductivité thermique du refroidisseur, kcal/°C.h.m$^2$ | 150 | 300 |
| Quantité évacuée, kg/h | 3 | 1,5 |
| Quantité de polymère produit en kg par kg de catalyseur TiCl$_3$ 1/3 AlCl$_3$ | $10^4$ | $10^4$ |
| Coloration des granulés de polymère produits | Des substances noires dues à du carbone ont été détectées dans une partie des granulés | non coloré |
| *1 Substances de basse masse moléculaire dans le polymère produit, % en poids | 1,0 | 0,55 |
| Indice de fluidité du polymère produit, dg/min | 2,2 | 2,0 |
| Fish eyes («yeux de poisson») dans un film de 30 µm | Présents en nombre | Absents |

* 1 Quantité extraite par le n-heptane pendant 72 h à température ambiante.

TABLEAU II

| | Exemple Comparatif 1 | Exemple Comparatif 2 | Exemple 3 |
|---|---|---|---|
| Polyéthylèneglycol | M.M. 7000 | Non utilisé | M.M. 4000 |
| Température de la couche de polymère dans le séparateur haute pression, °C | 235 | 250 | 235 |
| Conduite de recyclage de l'éthylène — Coefficient global de conductivité thermique du refroidisseur, kcal/°C.h.m$^2$ | 200 | 150 | 300 |
| Quantité évacuée, kg/h | 2,0 | 2,7 | 1,2 |
| Quantité de polymère produit en kg par kg de catalyseur solide | $1,5 \times 10^4$ | $1,6 \times 10^4$ | $1,5 \times 10^4$ |
| Coloration des granulés de polymère produit | blanc laiteux | contient des granulés bruns | blanc laiteux |
| * 1 substances de basse masse moléculaire dans le polymère produit % en poids | 1,1 | 1,4 | 0,6 |
| Indice de fluidité du polymère produit, dg/min | 7,0 | 7,1 | 7,0 |
| Fish eyes («yeux de poisson») dans un film de 30 µm | Absents | Nombreux | Absents |

* 1 voir tableau I

TABLEAU III

| | exemple comparatif 1 | exemple comparatif 2 | exemple 4 |
|---|---|---|---|
| Polypropylèneglycol | M.M. 300 | non utilisé | M.M. 700 |
| Séparateur haute pression — Température du mélange réactionnel à l'entrée, °C | 235 | 240 | 235 |
| Température de la couche de polymère, °C | 235 | 240 | 230 |
| Conduite de monomère recyclé non réagi — Coefficient global de conductivité thermique du refroidisseur, kcal/°C.h.m$^2$ | 300 | 150 | 300 |
| Quantité évacuée, kg/h | 1.0 | 2.5 | 1.0 |
| Quantité de polymère produit en kg par kg de catalyseur solide | $1.5 \times 10^4$ | $1.5 \times 10^4$ | $1.5 \times 10^4$ |
| Coloration des granulés de polymère produit | blanc laiteux | blanc laiteux | blanc laiteux |
| * 1 Substances de basse masse moléculaire dans le polymère produit, % en poids | 1.1 | 1.5 | 0.8 |
| Indice de fluidité du polymère produit, dg/min | 3.0 | 3.0 | 3.0 |
| Fish eyes («yeux de poisson») dans un film de 30 µm | très peu | très peu | absents |

* 1 voir tableau I

## Revendications

1. Procédé de fabrication d'homopolymères ou de copolymers de l'éthylène consistant à polymériser en continu l'éthylène ou à copolymériser en continu l'éthylène et une α-oléfine sous une pression d'au moins 300 bars et à une température d'au moins 130°C en présence d'un système catalytique comprenant un composé d'au moins un métal de transition des groupes IVa à VIa de la Classification Périodique et un composé organométallique d'un métal des groupes I à III de la Classification Périodique, caractérisé en ce que on ajoute, au milieu réactionnel, à la fin de la réaction, un polyalkylèneglycol ayant une masse moléculaire comprise entre 300 et 5000, en une quantité molaire comprise entre 0,4 et 15 fois le nombre total d'atomes-grammes du métal de transition des groupes IVa à VIa et du métal des groupes I à III.

2. Procédé selon la revendication 1, caractérisé en ce que le polyalkylèneglycol est un polyéthylèneglycol, un polypropylèneglycol ou un polybutylèneglycol.

3. Procédé selon l'une des revendications 1 à 2, caractérisé en ce que le polyalkylèneglycol est ajouté sous la forme d'une solution dans un solvant inerte.

4. Procédé selon la revendication 3, caractérisé en ce que le solvant inerte est choisi parmi les hydrocarbures aliphatiques, aromatiques et alicycliques.

## Claims

1. Process for the manufacture of ethylene homopolymers or copolymers consisting in continuously polymerizing ethylene or in continuously copolymerizing ethylene and an α-olefin at a pressure of at least 300 bars and at a temperature of at least 130°C in the presence of a catalyst system comprising a compound of at least one transition metal of groups IVa to VIa of the Periodic Classification and an organometallic compound of a metal of groups I to III of the Periodic Classification, characterized in that a polyalkylene glycol which has a molecular mass of between 300 and 5000 is added to the reaction mixture at the end of the reaction, in a molar quantity of between 0.4 and 15 times the total number of gram-atoms of the transition metal of groups IVa to VIa and of the metal of groups I to III.

2. Process according to Claim 1, characterized in that the polyalkylene glycol is a polyethylene glycol, a polypropylene glycol or a polybutylene glycol.

3. Process according to either of Claims 1 to 2, characterized in that the polyalkylene glycol is added in the form of a solution in an inert solvent.

4. Process according to Claim 3, characterized in that the inert solvent is chosen from aliphatic, aromatic and alicyclic hydrocarbons.

## Patentansprüche

1. Verfahren zur Herstellung von Äthylenhomo- oder -copolymeren durch kontinuierliches Polymerisieren des Äthylens oder kontinuierliches Copolymerisieren des Äthylens und eines α-Olefins unter einem Druck von mindestens 300 bar und bei einer Temperatur von mindestens 130°C in Gegenwart eines Katalysatorsystems, das eine Verbindung mindestens eines Übergangsmetalls der Gruppen IVa bis VIa des Periodensystems und eine organometallische Verbindung eines Metalls der Gruppen I bis III des Periodensystems enthält, dadurch gekennzeichnet, dass man dem Reaktionsmilieu am Ende der Reaktion ein Polyalkylenglykol mit einer Molekularmasse zwischen 300 und 5000 in einer Molmenge zwischen dem 0,4-fachen und 15-fachen der Gesamtzahl der Atomgramm des Übergangsmetalls der Gruppen IVa bis VIa und des Metalls der Gruppen I bis III zugibt.

2. Verfahren nach Anspruch 1, dadurch gekennzeichnet, dass das Polyalkylenglykol ein Polyäthylenglykol, ein Polypropylenglykol oder ein Polybutylenglykol ist.

3. Verfahren nach Anspruch 1 oder 2, dadurch gekennzeichnet, dass das Polyalkylenglykol in Form einer Lösung in einem inerten Lösungsmittel zugegeben wird.

4. Verfahren nach Anspruch 3, dadurch gekennzeichnet, dass das inerte Lösungsmittel ausgewählt ist aus der Gruppe bestehend aus den aliphatischen, aromatischen und alizyklischen Kohlenwasserstoffen.